Europäisches Patentamt

European Patent Office

Office européen des brevets

(11) Publication number: **0 457 440 A2**

# EUROPEAN PATENT APPLICATION

(21) Application number: **91303485.6**

(22) Date of filing: **18.04.91**

(51) Int. Cl.⁵: **G09G 3/30, H04N 3/12**

(30) Priority: **14.05.90 US 523214**

(43) Date of publication of application:
**21.11.91 Bulletin 91/47**

(84) Designated Contracting States:
**AT BE CH DE DK ES FR GB GR IT LI LU NL SE**

(71) Applicant: **THE CHERRY CORPORATION**
**3600 Sunset Avenue**
**Waukegan Illinois 60085(US)**

(72) Inventor: **Theroux, Theodore N.**
**26148 West Mary Ann Road**
**Antioch, Illinois 60002(US)**

(74) Representative: **Wain, Christopher Paul et al**
**A.A. THORNTON & CO. Northumberland**
**House 303-306 High Holborn**
**London WC1V 7LE(GB)**

(54) **Grey scale display.**

(57) An electroluminescent monochrome display is operated to provide a detailed grey scale image. The display utilizes pulse width modulation to selectively control the grey scale intensity of the pixels (3) of the display. The grey scale data may be provided in two or more successive frames which each contain a portion of the grey scale data for the pixels of the display.

FIG-1

## TECHNICAL FIELD

The invention concerns a drive apparatus for a matrix-addressed display, such as an electroluminescent display. More particularly, the invention concerns a drive apparatus which operates the matrix-addressed pixels of the display at selected levels of illumination so that the display provides a relatively detailed grey scale image.

## BACKGROUND OF THE INVENTION

Matrix-addressed displays such as electroluminescent displays have been operated with drive apparatus which selectively turns individual pixels of the display on or off and thereby provides a desired light image. The detail of such images is rather limited.

It is known that a relatively detailed monochrome image may be produced by selectively energizing pixels of the display at different levels of intensity. Such a display provides an image having many selected intensities or tones and therefore a greater level of detail.

A significant increase in pixel data is required in order to achieve a relatively detailed grey scale image. This requirement for substantially increased pixel data is particularly burdensome for relatively large displays.

Accordingly, it is an object of the invention to provide a drive apparatus which can produce a relatively detailed grey scale displayed image.

It is a further object of the invention to provide such a drive apparatus wherein the grey scale intensities of pixels of the display are provided by pulse width modulation of drive signals for the display.

Another object of the invention is to provide a display drive apparatus which can provide detailed grey scale images for relatively large electroluminescent display panels.

## SUMMARY OF THE INVENTION

In order to achieve the objects of the invention and to overcome the problems of the prior art, the display apparatus of the invention selectively illuminates pixels with grey scale intensity levels defined by digital data words. Each digital data word corresponds to a particular defined driving pulse width for a column of the display. The pulse width for the column drive signal defines the level of intensity of light which is generated at the pixel of the column and an associated scanned row.

In a relatively large display, the intensity of any particular pixel is defined over two or more consecutive display frames of data. The two consecutive frames define fifteen or any desired number of time slots for additive pulse width modulation of the column driving signal of the pixel. The use of such additive pulse width modulation ensures that a relatively detailed grey scale image can be provided at a reduced frequency of operation for the driving apparatus of the display, while maintaining a reasonably high refresh rate for the display.

## BRIEF DESCRIPTION OF THE DRAWINGS

FIG. 1 illustrates a diagrammatic illustration of a pulse width modulated grey scale display.

FIG. 2 illustrates a table of grey scale pulse width modulation data for the display of FIG. 1.

FIG. 3 illustrates a timing diagram of row and column signals for operating the grey scale display of FIG. 1.

FIG. 4 shows a diagrammatic illustration of a relatively large grey scale display which is made up of 640 columns and 480 rows.

FIG. 5 illustrates a timing diagram of grey scale pulse width modulation signals for successive data frames of the display of FIG. 4.

FIG. 6 illustrates a chart of grey scale pulse width modulation data for the successive data frames of the display of FIGs. 4 and 5.

FIG. 7 illustrates a diagram of a logic circuit which provides the grey scale frame data for the display system of FIGS. 4-6.

FIG. 8 shows a diagrammatic illustration of a single grey scale chip and column driver for the display of FIG. 4.

## DETAILED DESCRIPTION OF PREFERRED EMBODIMENTS

The remaining portion of the specification will describe preferred embodiments of the invention when read in conjunction with the attached drawings, in which like reference characters designate identical apparatus.

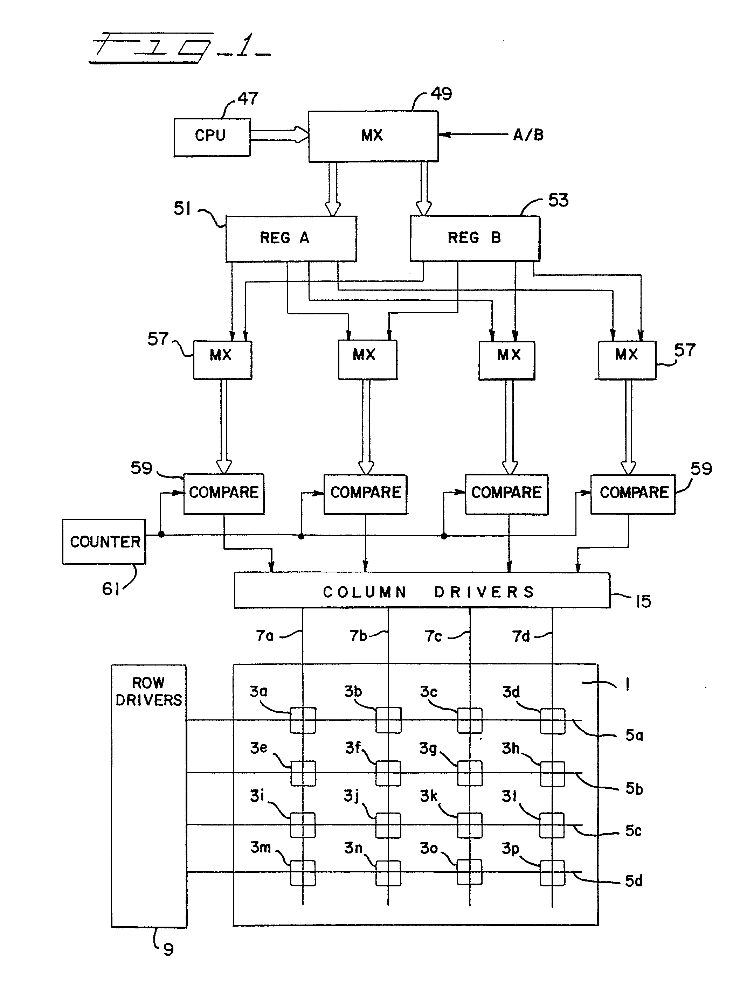

FIG. 1 is a diagrammatic illustration of a matrix-addressed display which utilizes pulse width modulation to provide a relatively detailed grey scale image. The display apparatus of FIG. 1 includes an electroluminescent display panel 1 which has a matrix of electroluminescent monochrome pixels 3a-3p. For simplicity of illustration the pixels are arranged in four parallel rows 5a-5d and four associated intersecting parallel columns 7a-7d. The electroluminescent pixels 3a-3p are disposed between the row electrodes 5a-5d and column electrodes 7a-7d. The display panel of FIG. 1 will hereinafter be described with respect to a DC operation. However, it should be understood that the panel could also be operated in accordance with known AC drive technology.

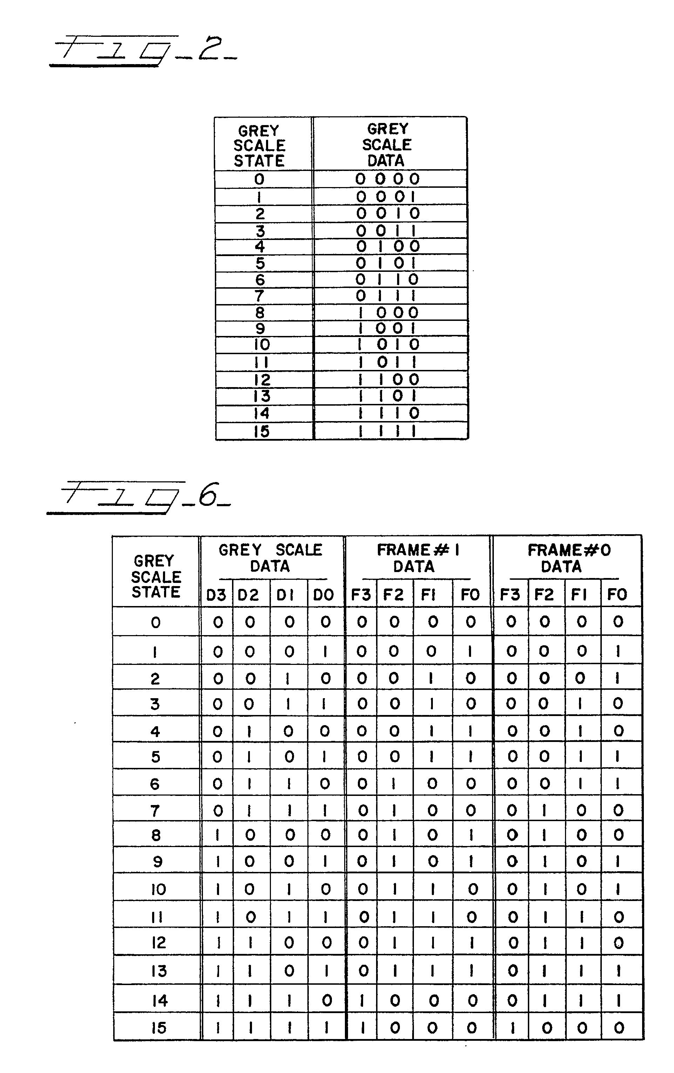

In the display apparatus of FIG. 1, a grey scale image is formed by illuminating the pixels 3a-3p at selected intensity levels. FIG. 2 illustrates a table of 16 digitally defined intensity levels for the display. As shown in FIG. 2, the light intensity level of any particular pixel of a display can range from a relatively dark or off state 0 to the highest light intensity of state 15. Thus, the light intensity of any pixel of the panel 1 can be defined by a grey scale state of from 0 to 15 which indicates the relative intensity of light generated at the pixel.

As shown by the table of FIG. 2, the darkest grey scale state of 0 corresponds to a grey scale binary data word of 0000. The following grey scale state of 1 has an incrementally increased light intensity which corresponds to the grey scale binary data word 0001. Likewise, the next grey scale state of 2 corresponds to a grey scale data word of 0010. The numerically increasing states have corresponding binary data words which increase to the greatest binary data word 1111.

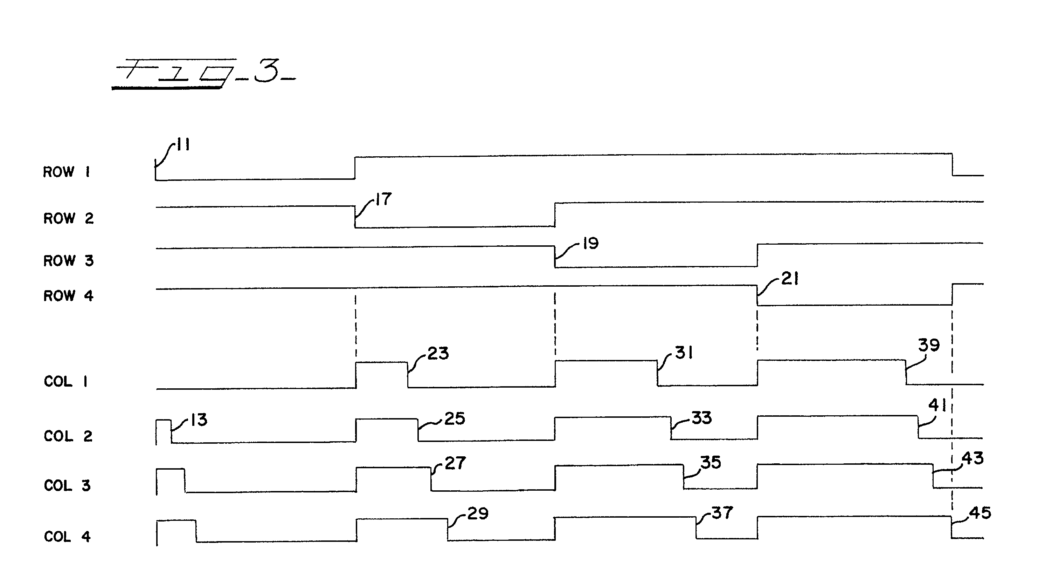

FIG. 3 illustrates a timing diagram of row and column drive signals which could be applied to provide incrementally increasing pixel intensities for the illustrated pixels 3a-3p. As shown in FIGS. 1 and 3, a row driver 9 generates a negative scanning voltage (-HV) signal indicated at 11 on the Row 1 electrode 5a. As shown at FIG. 3, the Column 1 electrode 7a has a zero voltage signal which is applied continuously during the entire period of the low voltage row scanning signal 11. The zero signal on Column 1 results in a combined Row 1, Column 1 signal applied at the pixel 3a which is insufficient to light the pixel. Accordingly, the pixel 3a remains off and is therefore operated at the 0 grey scale state of FIG. 2.

As shown in FIG. 3, during the time at which a low voltage scanning signal is applied to the Row 1 electrode 5a, the Column 2 electrode 7b receives a positive pulse 13 (+HV) from a column driver 15. The positive column drive pulse 13 of the Column 2 electrode 7b has a pulse width that is 1/15 of the width of the Row 1 drive pulse 11. Also, the positive column pulse 13 occurs at the beginning of the Row 1 drive pulse 11. The Row 1 pulse 11 and Column 2 pulse 13 combine at the pixel 3b to provide the second lowest level of illumination of the pixel, which is designated as grey scale state 1 of the chart of FIG. 2.

With reference to the timing diagram of FIG. 3, the third column electrode 7c receives a positive drive pulse which is twice as wide as the pulse 13. Thus, the drive pulse for the column electrode 7c is 2/15 of the pulse width of the Row 1 drive signal 11. The column 3 drive pulse therefore corresponds to two of the 15 time slots which occur within the period of the Row 1 drive signal 11. The drive pulse therefore has a grey scale state of 2. Likewise, it should be understood that the pulse 13 of Column 2 corresponds to one time slot and for this reason the pixel 3a has a reduced intensity with respect to the pixel 3b.

As shown in FIG. 3, the fourth column electrode 7d has a positive pulse which extends over 3 time slots of the Row 1 signal 11. The signal at the fourth column electrode 7d combines with the Row 1 signal 11 of the row electrode 5a to provide a light intensity at the pixel 3d which corresponds to the grey scale state 3 of the table of FIG. 2.

In energizing the panel 1 of FIG. 1, the row electrodes 5a-5d are successively energized with the associated row signals 11, 17, 19 and 21 and the row signals thus provided are combined with associated column signals to light associated pixels. Thus, after the Row 1 electrode 5a is scanned with the signal 11, the signal 17 is applied to scan the next succeeding Row 2 electrode 5b. As shown in the timing diagram of FIG. 3, the column electrodes 7a, 7b, 7c and 7d receive associated positive pulses 23, 25, 27, and 29, which have respective incrementally increasing pulse widths of 4, 5, 6 and 7 time slots. The indicated signals for the Row 2 electrode 5b and column electrodes 7a-7d provide associated pixels 3e, 3f, 3g, and 3h with increasing light intensities associated with grey scale states 4, 5, 6 and 7 of the chart of FIG. 2.

Likewise, as shown in FIG. 3, the next successive Row 3 electrode 5c receives its row signal 19 in association with corresponding column signals 31, 33, 35 and 37 which have respective time slot pulse widths of 8, 9, 10, and 11. These row and column signals provide incrementally increasing intensities for pixels 3i, 3j, 3k, and 3l which respectively correspond to the grey scale states 8, 9, 10 and 11 of FIG. 2.

Finally, as shown in FIG. 3, the 4th row electrode receives its associated row scanning signal 21 and the column electrodes 7a, 7b, 7c and 7d receive positive column drive pulses 39, 41, 43, and 45 which have respective pulse widths corresponding to 12, 13, 14 and 15 time slots. The indicated row and associated column signals provide incrementally increasing intensities for pixels 3m, 3n, 3o, and 3p, which respectively correspond to grey scale states 12, 13, 14, and 15.

It should now be understood that the timing signals of FIG. 3 provide the full range of grey scale levels in an incrementally increasing fashion for the pixels 3a-3p. The timing signals of FIG. 3 define a single frame of data which controls all pixels of the panel of FIG. 1. The term "frame" shall therefore hereinafter be used to refer to the data which is required to operate all of the pixels of a display panel to provide a desired image.

FIG. 1 includes a diagrammatic illustration of apparatus which is used to receive digital data from a central processing unit 47 and apply the data to define successive frames of display information for the display panel 1. In operation, the CPU 47 utilizes four bit words to define the level of intensity for each pixel of the display. The four-bit words of the CPU are applied to a multiplexer 49 which alternately loads on A register 51 and B register 53 in accordance with the state of an A/B select line 55.

Each of the registers A and B has sufficient capacity to store the column data for an entire row of the display panel 1. The registers are utilized to store successive rows of data so that one register can be filled with new row data while the row data of the other register is being displayed by the panel 1. The registers therefore operate as buffers to alternately store and display rows of data.

When one of the registers 51 or 53 is selected to display a row of data, the data of the register is selected by multiplexers 57 which pass the selected four-bit column data words to associated comparators 59. When an entire row of data is applied to the comparators 59, a time slot counter 61 counts from a zero time slot count state to a 14 time slot count state. As the counter 61 is incremented from zero to 14, its count state is compared by the comparators 59 with the four-bit column data words which are applied from the multiplexers 57. Each of the comparators 59 will generate an output which will activate associated column drivers 15 and energize associated column electrodes 7a-7d for as long as the count state of the incrementing counter 61 is less than the associated column data word.

Thus, for example, if a binary data word of 1111 is defined for a particular column, the column driver for that column will be energized over the entire counting cycle of from 0 to 14 of the counter 61. However, if, for example, a binary 5 (i.e., 0101) is applied as a column word, the associated column electrode will be energized by its column driver 15 only during count states 0, 1, 2, 3 and 4 of the counter 61. Thus, the column will be energized for five time slots and, as explained with respect to FIG. 3, the five time slot column signal will be combined with an associated row scan signal to provide a relative pixel intensity which corresponds to the gray scale state 5 of the table of FIG. 2.

When the counter 61 has incremented from zero to 14, it is reset to zero and the next successive row of new column data is applied to the comparators 59. The counter then counts again from 0 to 14 and the column drivers 15 are operated in the previously described manner to energize the pixels of the next succeeding scanned row of data to provide pixels having selected levels of grey scale intensity.

It should now be understood that the counter 61 operates in association with the comparators 59 to energize the column drivers 15 for time slot periods defined by the four-bit column data words of the CPU 47. The counter, comparators and column drivers therefore provide selected intensities for the pixels of an entire frame of data from the CPU. The data from the CPU is displayed in the described manner at a frequency of, for example 160 hertz.

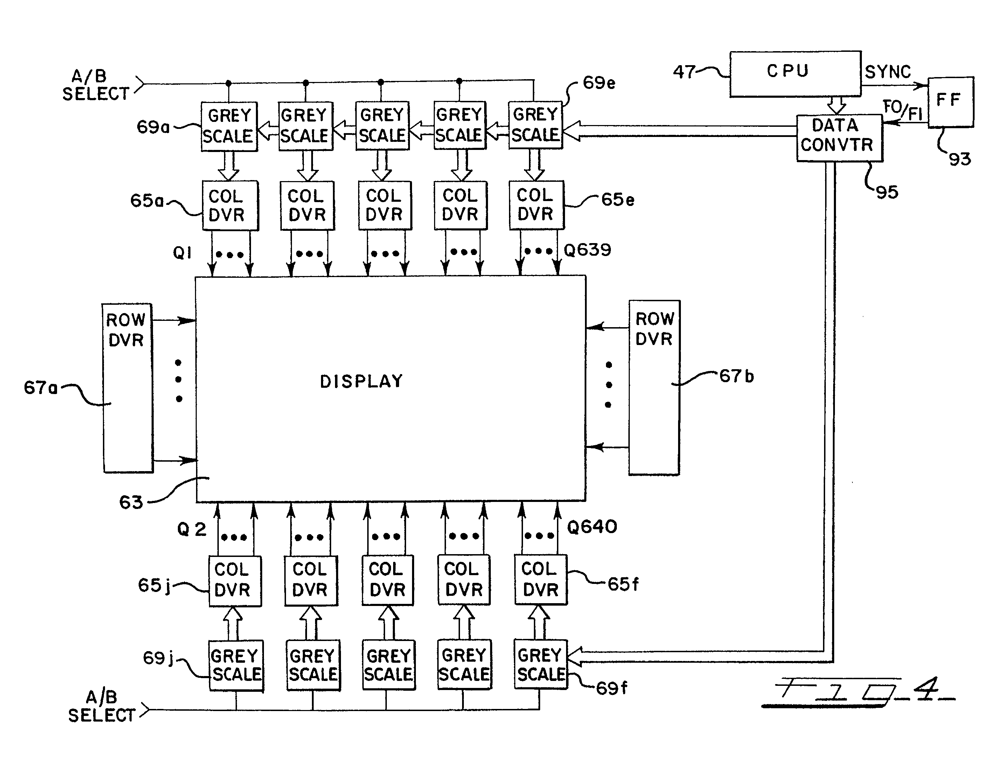

FIG. 4 shows a diagrammatic illustration of a relatively large electroluminescent matrix addressed display 63 which incorporates 640 columns and 480 rows. This rather large grey scale display operates in a manner which is similar to the relatively small display described with respect to FIGS. 1-3.

As shown in FIG. 4, the display 63 includes ten column driver chips 65a-j which provide the time slot column signals which correspond to the selected grey scale intensities of pixels of the display. The column driver chips are commercially available from the Supertex Corporation and are commercially identified as HV77 column drivers. As shown in FIG. 4, five of the column drivers are arranged adjacent to the top of the display and the remaining five of the column drivers are arranged adjacent to the bottom of the display.

Each of the column drivers energizes 64 columns. The column drivers 65a-e energize the odd columns of the display which are designated Q1-Q639. The column drivers 65f-j energize the even columns Q2-Q640. The column electrodes associated with the top column drivers are interleaved with the column electrodes associated with the bottom column drivers.

Row drivers 67a and 67b are provided at opposite ends of the display to respectively drive odd and even rows of the display which are interleaved in the manner described with respect to the column drivers.

Grey scale chips 69a-j are arranged adjacent to the top and bottom of the display and are interconnected to one another and to their associated column drivers. The grey scale chips receive four-bit column data words from the CPU 47 and apply the bits to operate the column drivers and therefore provide selected grey scale illumination of the pixels of the display. Each of the grey scale chips includes A and B registers which each store 64 words of data, each word defining 16 grey scale levels. The A and B registers are alternately selected in the manner described with respect to the system of FIG. 1 in order to buffer the display data provided from the CPU 47.

It was found that the relatively simple system described with respect to FIGS. 1-3 could not be employed in its entirety to energize the relatively large display of FIG. 4. Thus, it was found that the drive hardware could not operate at a sufficiently high frequency to provide the relatively large amount of data required to define a sixteen level grey scale frame delivered at 160 hertz.

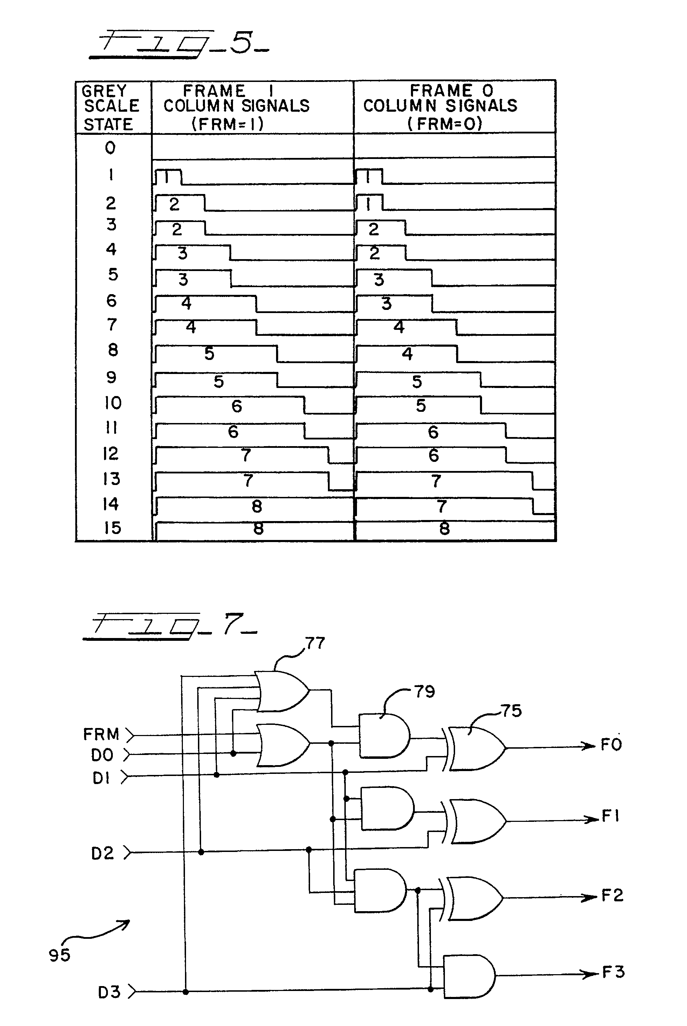

In order to provide a satisfactory relatively lower operating frequency for the hardware, it was necessary to define sixteen grey scale levels over two successive frames for the display of FIG. 4. FIG. 5 illustrates the sixteen required grey scale states in association with column time slot drive signals for the two successive frames zero and one which are required for operation of the display of FIG. 4.

With reference to FIG. 5, it can be seen that the grey scale state 0 corresponds to a low column drive signal for the two successive frames one and zero. The next grey scale state 1 is defined as single positive column time slot signals 71 and 73 for frame zero and one. It was found that use of a single time slot for each frame eliminates a slight flicker which would otherwise be perceived if only one of the two frames had active time slots. Thus, it should be understood that it is preferred to define grey scale states by using active time slots divided between frames zero and one.

The next successive grey scale state 2 is defined by the combination of a one time slot positive pulse in frame zero and a two time slot positive pulse in frame one. The grey scale intensity state 3 is defined as two time slot positive pulses in both frame zero and frame one. The succeeding required time slot signals for the frames are shown in the chart for the remaining grey scale states. It should be understood that the highest intensity grey scale state 15 is provided when an eight time slot signal is used for both frames zero and one.

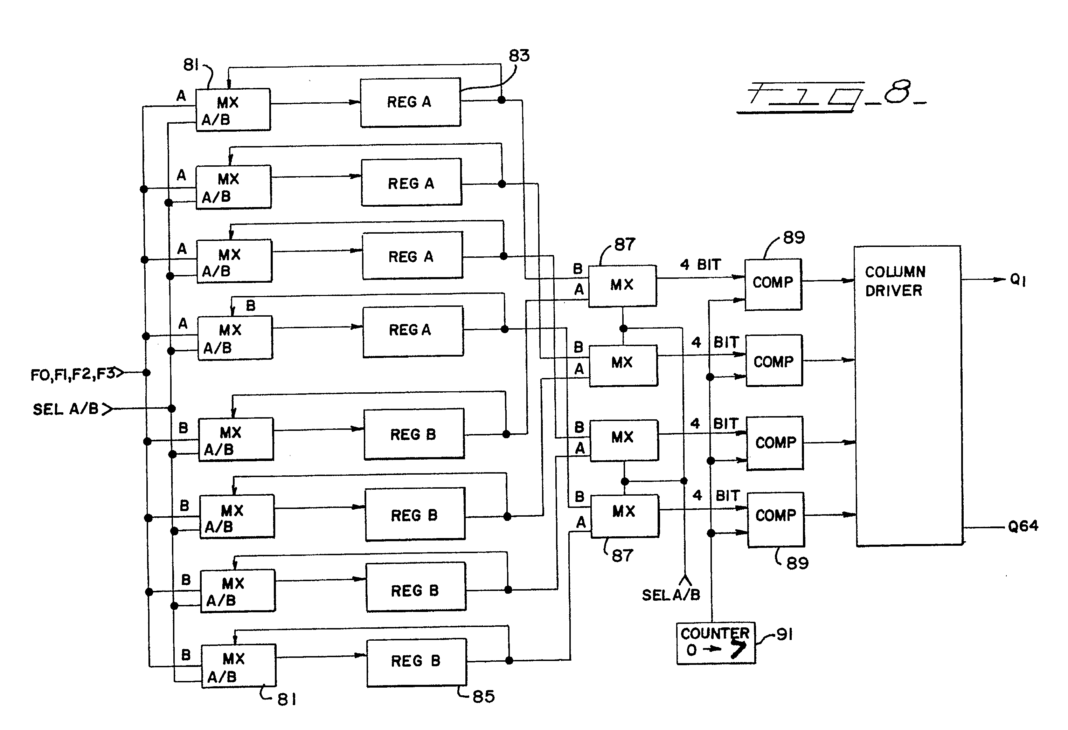

FIG. 6 illustrates a chart of the grey scale states 0-15 in association with a binary CPU grey scale data word which would be provided by the CPU 47 and associated frame zero and frame one data words which are defined to provide the column driver signals of FIG. 5.

FIG. 7 illustrates a diagram of a data converter logic circuit 95 which is used to generate the desired frame zero and frame one output data F0-F3 of FIG. 6 in response to CPU input data D0-D3 and a frame select signal FRM which is a 0 to designate frame zero and a 1 to designate frame one. Thus, the logic circuit of FIG. 7 utilizes exclusive-OR gates 75, OR gates 77 and AND gates 79 to generate the frame zero data words indicated in FIG. 6 in response to the indicated CPU data, when the frame bit FRM is 0. Likewise, when the FRM bit is 1, the circuit of FIG. 7 generates the frame one data from the input CPU data. It should be understood in analyzing the circuit of FIG. 7 that, as is known in the art, OR gates generate a high level output if at least one input is high, AND gates generate a high level output if all inputs are high and Exclusive-OR gates generate a high logic output only if one input is high and the other input is low.

FIG. 8 shows a diagrammatic illustration of one of the grey scale chips 69a-j of FIG. 4. As shown in FIG. 8, input multiplexers 81 receive the frame data F0-F3 from the data converter logic circuit of FIG. 7. This frame data is applied to write the data to A registers 83 or B registers 85 in accordance with the condition of the A/B select line. As explained previously, the A and B registers are used to buffer input data so that new incoming data may be stored while previously stored data is being displayed. Each of the registers 83 and 85 has sufficient capacity to store up to 64 data words of four bits.

Secondary multiplexers 87 select either the data stored in the A register or in the B register and apply the selected data to comparators 89. The comparators 89 compare the data from the multiplexers 87 with the count state of a counter 91 and drive associated column electrodes Q1-Q64 of the column driver until the input data of the comparator is equal to the count state of the counter 91.

It should be understood that when registers 83 or 85 are selected to read out data, the data is applied in a serial fashion to the secondary multiplexers 87 and each of the multiplexers 87 therefore serially applies sixteen data words to its associated comparator 89. The sixteen data words of each register are applied through the multiplexer 87 to the comparator 89 and are compared with a single defined count state of the counter 91. The sixteen data words of each register are fed back to an associated multiplexer 81 and are then recirculated through the register so that the sixteen data words are rewritten into the register after they have been read and applied to the comparator 89.

After sixteen data words have been read from each selected register and compared to a single count state of the counter 91, the counter is incremented to its next count state and that count state is compared to the same sixteen data words of the selected registers.

The counter 91 is incremented in the above-described fashion from 0 to 7 in order to define all of the time slots for a particular row of data. Thereafter, the counter is reset to 0 and is counted again up to 7 in order to generate the time slot column driver signals for the next successive row of data.

It should now be understood that 640 words of four-bit column data are read into the selected registers 83 or 85 of the entire grey scale system in order to set up the column words for an entire row of the display of FIG. 4. Thereafter the data is read serially in eight cycles of the registers and is compared to eight successive incremental count states of the counter 91.

When the column data of a row has been completely displayed, a new set of column data is selected for display in association with the next successive scanned row. Column data is thus defined for each successive row until the entire frame of data has been displayed. Thereafter, with reference to FIG. 4, a flip flop 93 is toggled to select the next successive frame (frame one or frame zero) and data is again supplied from the CPU 47, converted by the data converter cirouit 95 and applied to the grey scale chips 69a-j to control the column drivers 65a-j and thereby provide the grey scale display for the next frame.

Although a drive apparatus has been disclosed with respect to an electroluminescent display, it should be understood that the described principles of the disclosed apparatus could be employed to provide a grey scale display with other types of displays, for example plasma displays. Moreover, the invention is not limited to display systems which define sixteen grey scale levels. A greater or lesser number of grey scale levels could be provided within the scope of the invention.

## Claims

1. A grey scale display characterised in that it comprises a matrix of display pixels (3), each pixel (3) having means for illuminating at an intensity which varies in accordance with the pulse width of a driving energization pulse, and means (49) for generating and selectively pulse width modulating said driving energization pulses to produce a grey scale image formed by said pixels illuminated at selected varying intensities.

2. A display as claimed in claim 1, characterised in that said means for generating and selectively pulse width modulating includes means (59,61) for defining a time slot count value for each pixel proportional to the desired intensity of illumination of the pixel, and means (15,59) for generating a driving energization pulse for each pixel with a pulse width which corresponds to said time slot count value.

3. A display as claimed in claim 2, characterised in that said means for generating includes a counter for counting time slot periods from zero up to said count value and driver means (15,59) for generating said energization pulse during the count from zero to said count value.

4. A display as claimed in any one of the preceding claims, characterised in that it further includes means for generating separate pulse width modulated driving energization pulses for each pixel over at least two successive display frames of the display, the sum of the pulse widths of the pulses corresponding to the desired illumination intensity of the pixel.

5. A grey scale display, comprising a matrix of display pixels (3), each pixel (3) having means for illuminating at an intensity which varies in accordance with the pulse width of a driving energization pulse; and means for generating and selectively pulse width modulating said driving energization pulses over at least two successive display frames of data to produce a grey scale image formed by said pixels illuminated at selected varying intensities.

Fig-1-

## FIG-2-

| GREY SCALE STATE | GREY SCALE DATA |
|---|---|
| 0 | 0 0 0 0 |
| 1 | 0 0 0 1 |
| 2 | 0 0 1 0 |
| 3 | 0 0 1 1 |
| 4 | 0 1 0 0 |
| 5 | 0 1 0 1 |
| 6 | 0 1 1 0 |
| 7 | 0 1 1 1 |
| 8 | 1 0 0 0 |
| 9 | 1 0 0 1 |
| 10 | 1 0 1 0 |
| 11 | 1 0 1 1 |
| 12 | 1 1 0 0 |
| 13 | 1 1 0 1 |
| 14 | 1 1 1 0 |
| 15 | 1 1 1 1 |

## FIG-6-

| GREY SCALE STATE | GREY SCALE DATA | | | | FRAME #1 DATA | | | | FRAME #0 DATA | | | |
|---|---|---|---|---|---|---|---|---|---|---|---|---|
| | D3 | D2 | D1 | D0 | F3 | F2 | F1 | F0 | F3 | F2 | F1 | F0 |
| 0 | 0 | 0 | 0 | 0 | 0 | 0 | 0 | 0 | 0 | 0 | 0 | 0 |
| 1 | 0 | 0 | 0 | 1 | 0 | 0 | 0 | 1 | 0 | 0 | 0 | 1 |
| 2 | 0 | 0 | 1 | 0 | 0 | 0 | 1 | 0 | 0 | 0 | 0 | 1 |
| 3 | 0 | 0 | 1 | 1 | 0 | 0 | 1 | 0 | 0 | 0 | 1 | 0 |
| 4 | 0 | 1 | 0 | 0 | 0 | 0 | 1 | 1 | 0 | 0 | 1 | 0 |
| 5 | 0 | 1 | 0 | 1 | 0 | 0 | 1 | 1 | 0 | 0 | 1 | 1 |
| 6 | 0 | 1 | 1 | 0 | 0 | 1 | 0 | 0 | 0 | 0 | 1 | 1 |
| 7 | 0 | 1 | 1 | 1 | 0 | 1 | 0 | 0 | 0 | 1 | 0 | 0 |
| 8 | 1 | 0 | 0 | 0 | 0 | 1 | 0 | 1 | 0 | 1 | 0 | 0 |
| 9 | 1 | 0 | 0 | 1 | 0 | 1 | 0 | 1 | 0 | 1 | 0 | 1 |
| 10 | 1 | 0 | 1 | 0 | 0 | 1 | 1 | 0 | 0 | 1 | 0 | 1 |
| 11 | 1 | 0 | 1 | 1 | 0 | 1 | 1 | 0 | 0 | 1 | 1 | 0 |
| 12 | 1 | 1 | 0 | 0 | 0 | 1 | 1 | 1 | 0 | 1 | 1 | 0 |
| 13 | 1 | 1 | 0 | 1 | 0 | 1 | 1 | 1 | 0 | 1 | 1 | 1 |
| 14 | 1 | 1 | 1 | 0 | 1 | 0 | 0 | 0 | 0 | 1 | 1 | 1 |
| 15 | 1 | 1 | 1 | 1 | 1 | 0 | 0 | 0 | 1 | 0 | 0 | 0 |

Fig-3-

ROW 1 ROW 2 ROW 3 ROW 4 COL 1 COL 2 COL 3 COL 4

Fig 4

EP 0 457 440 A2

## Fig_5_

| GREY SCALE STATE | FRAME 1 COLUMN SIGNALS (FRM=1) | FRAME 0 COLUMN SIGNALS (FRM=0) |
|---|---|---|
| 0 | | |
| 1 | | |
| 2 | 2 | 1 |
| 3 | 2 | 2 |
| 4 | 3 | 2 |
| 5 | 3 | 3 |
| 6 | 4 | 3 |
| 7 | 4 | 4 |
| 8 | 5 | 4 |
| 9 | 5 | 5 |
| 10 | 6 | 5 |
| 11 | 6 | 6 |
| 12 | 7 | 6 |
| 13 | 7 | 7 |
| 14 | 8 | 7 |
| 15 | 8 | 8 |

## Fig_7_

FIG_8_